# EUROPEAN PATENT APPLICATION

(11) **EP 1 614 972 A2**
(43) Date of publication of application: **11.01.2006**
(21) Application number: 05002339.9
(22) Date of filing: 04.02.2005
(51) Int. Cl.: F24F 3/16, F24F 12/00

(54) **Air cleaning system**

(30) Priority: 24.06.2004 KR 2004047649
(71) Applicant: LG ELECTRONICS INC., Seoul (KR)
(72) Inventor: Choi, Ho Seon, Dongjak-gu Seoul (KR); Choi, In Ho, Gunpo-si Gyeonggi-do (KR); Kim, Jeong Yong, Seoul (KR); Yum, Kwan Ho, Guro-gu Seoul (KR)
(74) Representative: Sajda, Wolf E.

(57) **Abstract**

The present invention provides a structure of an air cleaning system that prevents a suction performance from being decreased, the air cleaning system including a cabinet provided to a ceiling or a wall, discharging purified air to a room, and having a first inlet formed on a side thereof for drawing room air, a fan is provided to a cabinet and drawing air into the cabinet, a filter for purifying the room air flowed into the cabinet via the fan, and at least one panel for selectively opening/closing the first inlet of the cabinet.

## Description

This application claims the benefit of Korean Applications No. 10-2004-0047649, filed on June 24, 20004, which is hereby incorporated by reference.

### BACKGROUND OF THE INVENTION

### Field of the Invention

The present invention relates to an air cleaning system for purifying room air and more particularly, to an air cleaning system for preventing dust particles from being caught into an inlet that sucks up the room air.

### Discussion of the Related Art

Generally, an air cleaning system is an apparatus for sucking up and cleaning room air, and then discharging purified air from which impurities such as dust particles are removed.

The air cleaning system that functions as above mentioned is divided into a ceiling-type air cleaning system filled in a ceiling so as not to protrude from the ceiling, and a cabinet-type air cleaning system movably provided at a side of a room.

The ceiling-type air cleaning system includes a cabinet provided in the ceiling to be an exterior of the system, a fan, and a filter for purifying the air.

On a surface of the cabinet, the surface being exposed to the room, there are provided an air inlet for drawing the room air and an air outlet for discharging the purified air.

The fan provided in the cabinet draws the room air into the cabinet such that the room air is flowed in through the air inlet, cleaned at the filter, and discharged back to the room through the air outlet.

The filter is provided between the fan and the air inlet so as to remove impurities such as dust particles included in the room air flowed in the cabinet.

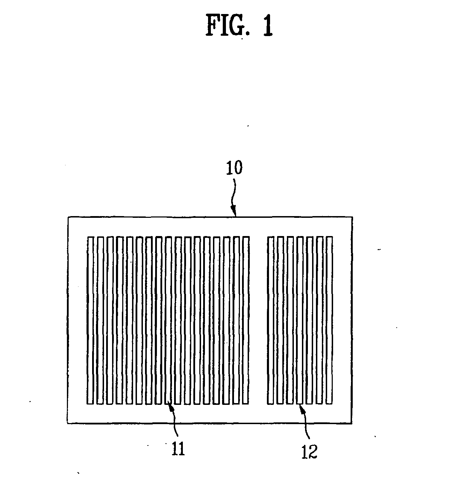

Meanwhile, referring to FIG. 1, a suction grill 11 having a plurality of air vents formed thereon is provided at the air inlet of the cabinet 10 so as to prevent large impurities from being flowed in the cabinet 10.

A discharge grill 12 having the plurality of air vents through which purified air is passed by the filter is provided at the air outlet provided at a side of the suction grill 11.

The related art air cleaning system structured as mentioned above has a problem that impurities such as dust particles are caught in the suction grill, thereby causing increase of air suction resistance and overload of the fan.

### SUMMARY OF THE INVENTION

Accordingly, the present invention is directed to an air cleaning system that substantially obviates one or more problems due to limitations and disadvantages of the related art.

An object of the present invention is to provide an air cleaning system having a structure for preventing a suction performance from being decreased.

Another object of the present invention is to provide a combination ventilator and air cleaning system enabling not only to clean but also to ventilate the room air.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages in accordance with the purpose of the invention as embodied and broadly described herein, there is provided an air cleaning system including a cabinet provided to a ceiling or a wall, discharging purified air to a room, and having a first inlet formed on a side thereof for drawing room air, a fan is provided to a cabinet and drawing air into the cabinet, a filter for purifying the room air flowed into the cabinet via the fan, and at least one panel for selectively opening/closing the first inlet of the cabinet.

The cabinet includes an opening/closing device for opening/closing at least one panel.

The at least one panel has one side rotatbly connected with one side of the first inlet via a hinge.

The opening/closing device includes a driving gear rotated by a motor, and a driven gear provided to the hinge and rotated by the driving gear.

The motor includes a stepping motor for adjusting an opening angle of the panel.

In another aspect of the present invention, the at least one panel includes a first panel, and a second panel being slid onto a first side of the first panel and stacked on the first panel.

The opening/closing device includes a pinion connected to the motor and rotated, and a rack provided at a side of the second panel and moving in a straight line via the pinion.

The motor includes a stepping motor for adjusting an opening area of the first inlet.

The at least one panel is vertically moved downward for opening the first inlet.

The opening/closing device includes a pinion provided to the motor, and a rack provide at the at least one panel and moving in a straight line via the pinion.

The motor includes a stepping motor for adjusting a distance between the first inlet and the at least one panel.

In addition to the structure, the air cleaning system further includes a supply duct communicating with the cabinet and guiding outside air to the cabinet, and an exhaust duct for guiding the room air outside.

In this case, the cabinet includes a second inlet provided on a side of the first inlet and communicating with the exhaust duct.

The filter is provided between the first inlet and the fan, and purifies air flowed into the cabinet through the first inlet and the supply duct.

For this reason, a space is formed between the filter and the first inlet, and the outside air guided the exhaust duct is flowed into a space between the filter and the first inlet. The exhaust duct includes an exhaust fan for forcing airflow therein.

In this case, the air cleaning system further includes a damper for selectively preventing the room air from being flowed into the exhaust duct.

The air cleaning system further includes a damper for selectively blocking the outside air guided by the cabinet through the supply air duct.

The air cleaning system further includes a regenerative heat exchanger for exchanging the heat between the outside air guided by the supply duct and the room air guided by the exhaust duct.

Meanwhile, the fan includes a centrifugal fan provided parallel to the first inlet.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:
FIG. 1 is a rear view showing a cabinet of a ceiling-type of an air cleaning system according to a related art;
FIG. 2 is a perspective view showing a structure of an air cleaning system according to a related art;
FIG. 3 is a rear view showing a lower portion of a cabinet provided in an air cleaning system according to a related art;
FIG. 4 is a diagram showing a structure of an opening/closing panel of an opening/closing device provided in the cabinet of an air cleaning system according to a first embodiment of the related art;
FIG. 5 is a diagram showing a structure of an opening/closing panel of an opening/closing device provided in the cabinet of an air cleaning system according to a second embodiment of the related art; and
FIG. 6 is a diagram showing a structure of an opening/closing panel of an opening/closing device provided in the cabinet of an air cleaning system according to a third embodiment of the related art.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

In order to ease the understanding of the present invention, the function of the air cleaning system is explained in the following.

An air cleaning system in accordance to the present invention is an apparatus for drawing room air to be cleaned, and discharging purified air from which impurities such as dust particles are removed.

Furthermore, the air cleaning system in accordance with the present invention is a combination ventilator and air cleaning system performing not only a cleaning function but also a ventilating function.

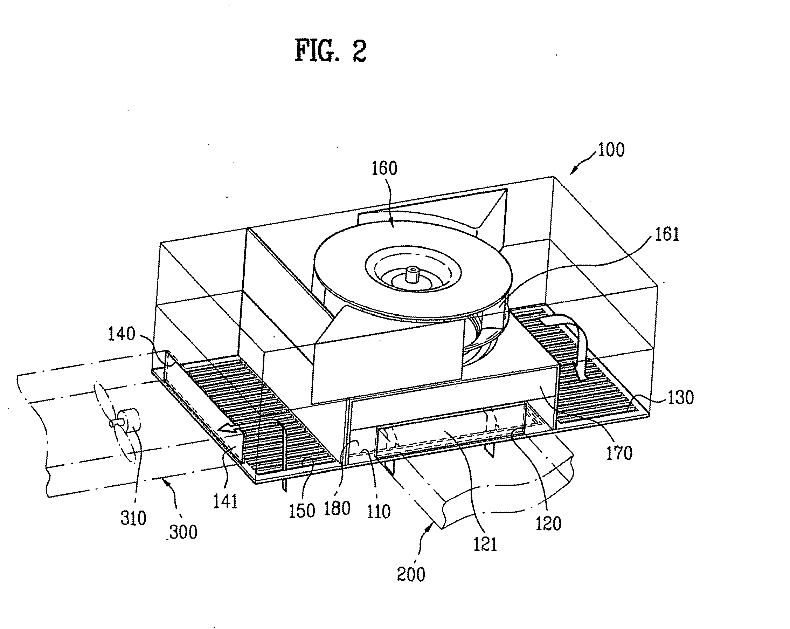

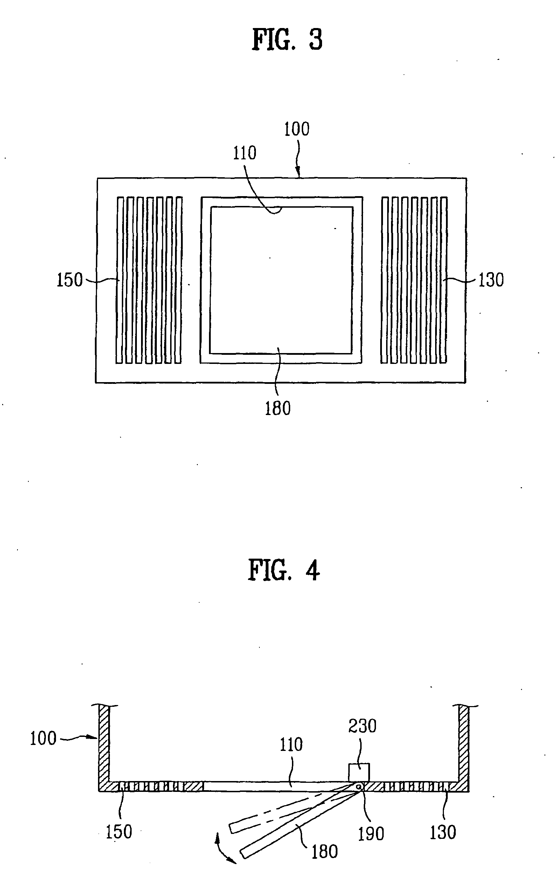

Hereinafter, the first embodiment in accordance to the present invention is explained referring to FIG. 2 and FIG. 3. FIG. 2 is a perspective view showing a structure of the air cleaning system in accordance with the present invention, and FIG. 3 is a bottom view showing a bottom of a cabinet provided in the air cleaning system in accordance with the present invention.

Referring to FIG. 2 and FIG. 3, an air cleaning system according to the present invention includes a cabinet 100 provided therein, a supply duct 200 coupled with the cabinet 100 and guiding outside air to the cabinet 100, and an exhaust duct 300 coupled with the cabinet 100 and guiding the room air to the outside thereof.

Although the exhaust duct 300 is provided apart from the cabinet 100 so as to guide the room air to the outside thereof, the exhaust duct 300 is communicated with the cabinet 100 in the present invention.

In this case, the cabinet 100 is provided to be filled in the ceiling or otherwise fixed to the ceiling such that a surface of the cabinet 100 is exposed. The cabinet 100 may of course be provided to be filled in a wall or fixed to the wall.

Although the cabinet 100 may be formed in a variety of forms, a hexagon parallelepiped, particularly a rectangular parallelepiped form of the cabinet 100 having a predetermined space therein is introduced in the preferred embodiment.

The cabinet 100 is configured to draw room air and/or outside air and to discharge purified air to the outside thereof.

For this reason, the cabinet 100 includes a first inlet 110 for drawing the room air, a second inlet 120 connected with the supply duct 200, a first outlet 130 discharging air to the room, and a second outlet 140 connected with the exhaust duct 300.

The second inlet 120 is provided on a first side of the cabinet 100, and the second outlet 140 is provided on a second side of the cabinet 100.

The second inlet 120 and the second outlet 140 may be provided on the same side as the cabinet 100. In this case, the exhaust duct 300 and the supply duct 200 are respectively inserted and connected to the second outlet 140 and the second inlet 120. The first inlet 110 and the first outlet 130 are provided on a bottom of the cabinet 100.

In more detail, the first inlet 110 is provided on a mid portion of the bottom of the cabinet 100. The first outlet 130 is provided on a first side of the first inlet 110.

A discharge grill having a plurality of air vents is provided at the first outlet 110. It is desirable that a third inlet 150 in communicating with the exhaust duct 300 is provided on a second side of the first inlet 110. In other words, the third inlet 150 is a portion into which the room air discharged to the outside through the exhaust duct 300 flows.

The cabinet 100 is divided into a first chamber (not shown) communicating with the third inlet 150, and a second chamber (not shown) communicating with the first inlet 110 and the second inlet 120.

A fan 160 forcibly air movement and a filter 170 for purifying the air discharged through the first outlet 130 are provided in the cabinet 100, particularly at the second chamber.

The filter 170 is provided on an upper portion of the first inlet 110 of the cabinet so as to purify air flowed into the cabinet 100 through the first inlet 110 and the second inlet 120.

Specifically, the filter 170 removes the impurities included in both the room air flowing in the second chamber through the first inlet 110 and the outside air flowing in through the second inlet 120.

Obviously, a separate filter assembly may further be provided at the cabinet 100 so as to remove microscopic impurities such as exhaust fume or odors.

Meanwhile, the fan 160 includes a motor, and a centrifugal fan 161 rotated by the motor.

In the circumference of the fan 160 and the filter 170, a guiding passage is formed for guiding the air radially discharged from the fan 160 to the first outlet 130.

In addition, a fan 310 forcing the movement of the air is separately provided in the exhaust duct 300 such that the room air is discharged outside.

It is desirable that the air cleaning system further includes an air blocking device to block the outside air from being flowed in the cabinet 100 through the supply air duct 200 in the air cleaning mode.

The air blocking device includes a first damper 121 provided on the second inlet 120 and selectively blocking the second inlet 120, and a damper-use motor (not shown) rotating the first damper 121.

The first damper 121 may of course be provided in the supply air duct 200. It is also desirable that a second damper 141 is provided in any one of the exhaust duct 300, the second outlet 140, and the third inlet 150.

According to the present embodiment, the second damper 141 is provided on the second outlet 140 so as to selectively block an entrance of the exhaust duct 300.

In the mean time, the air cleaning system of the present invention further includes at least one panel 180 for selectively blocking the first inlet 110 of the cabinet, and an opening/closing device for opening/closing the at least one panel 180.

In this case, the at least one panel 180 formed corresponding to the shape of the first inlet 110 opens a predetermined portion of the first inlet 110 during the operation of the air cleaning system, and closes the first inlet 110 during the stoppage of the operation of the air cleaning system.

According to a degree of the opening of the first inlet 110 opened by the at least one panel 180, the quantity of the room air flowed in the cabinet 100 is adjusted.

Hereinafter, referring to FIG. 4 to FIG. 6, each embodiment of the at least one panel 180 and the opening/closing device will be explained, the opening/closing device for opening/closing the at least one panel 180.

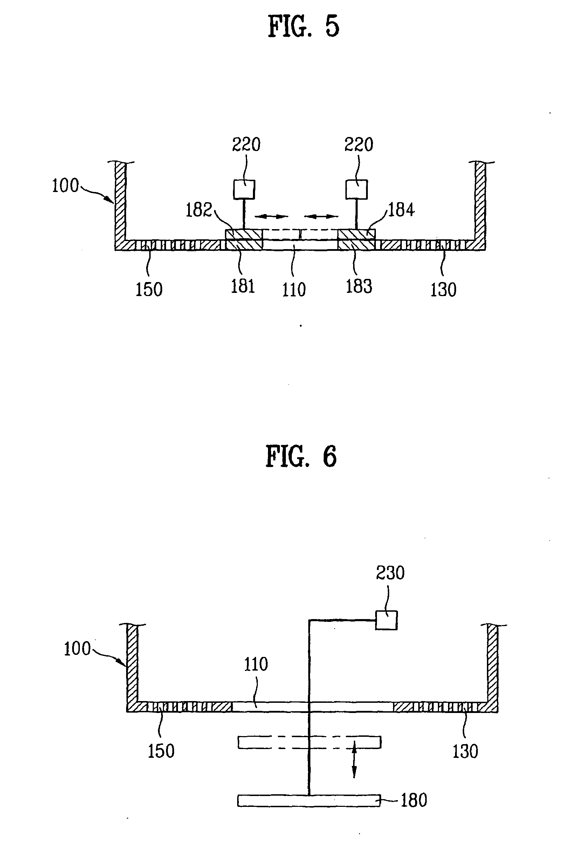

FIG. 4 is a diagram schematically showing a structure of the panel provided at the cabinet of the air cleaning system in accordance with the present invention and opened/closed by the opening/closing device in the first embodiment. FIG. 5 is a diagram schematically showing a structure of the panel provided at the cabinet of the air cleaning system in accordance with the present invention and opened/closed by the opening/closing device in the second embodiment. FIG. 6 is showing a diagram schematically showing a structure of the opened/closed panel provided at the cabinet of the air cleaning system in accordance with the present invention and opened/closed by the opening/closing device in the third embodiment.

Referring to FIG. 4, the at least one panel 180 has a side rotatably connected to a side of the first inlet 110.

In more detail, the at least one panel 180 includes one panel having a first end rotatably coupled with a portion in the circumference of the first inlet through a hinge 190.

The opening/closing device includes a driving gear (not shown) rotated by a motor 210, and a driven gear (not shown) provided at the hinge 190 and rotated by the driving gear.

In this case, the driving gear is coupled with a rotating axis of the motor 210, and the driven gear is coupled with a rotating axis of the hinge 190.

The motor 210 includes a stepping motor adjusting an opening angle of the panel 180 and being rotatable in a first direction and a second direction.

Therefore, according to the opening angle of the panel 180, the quantity of the air drawn into the cabinet 100 through the first inlet 110 is adjusted.

Referring to FIG. 5, the at least one panel 180 includes a first panel 181, and a second panel 182 being slid to a side of the first panel 181 and stacked thereon.

In more detail, the first panel 181 is mounted on the side of the first inlet 110, and the second panel 182 is slid and stacked onto an upper portion of the first panel 181 so as to open a portion of the first inlet 110.

The opening/closing device in accordance with the present embodiment includes a pinion (not shown) rotatably connected to a motor 220, and a rack (not shown) provided on a side of the second panel 182 and moving in a straight line via the pinion.

In this case, the pinion is coupled with a rotating axis of the motor 220 and provided at a side of the second panel 182, particularly, at an edge of the top side of the second panel 182, to be horizontal to a moving direction of the second panel 182.

It is desirable that the motor 220 includes a stepping motor adjusting an opening area of the first inlet 110 and being rotatable in a first direction and a second direction.

Therefore, depending on the coupling of the second panel 182 and the first panel 181, the amount of air flowed into the cabinet 110 is adjusted.

Moreover, the at least one panel 180 further includes a third panel 183 fixed on an outer surface of the first inlet 110, and a fourth panel 184 being slid to an upper portion of the third panel 183 and opening/closing a portion of the first inlet 110.

In the mean time, referring to FIG. 6, the at least one panel 180 includes a panel being vertically moved downward so as to open the first inlet 110.

In other words, each point of the panel is moved in the same way to a same distance so as to open the first inlet 100.

The opening/closing device provided in the present embodiment includes a pinion (not shown) rotatably connected to a motor 230, and a rack (not shown) vertically provided on the panel 180 and moved in a straight line via the pinion.

In this case, it is desirable that the motor 230 includes a stepping motor adjusting a distance between the first inlet 110 and the panel 180 and being rotatable in a first direction and a second direction.

Therefore, depending on the distance between the first inlet 110 and the panel 180, the amount of air flowed into the cabinet 100 is adjusted.

Functions of the air cleaning system in accordance with the present invention are explained as follows. First of all, a case of operating the air cleaning system in an air ventilation mode is explained.

Once electric power is supplied to the air cleaning system, the first inlet 110 is closed by at least one panel 180, the second inlet 120 is opened by the damper 121, and the fan 160 of the cabinet 100 and the fan 310 of the exhaust duct 300 are driven.

Accordingly, the outside air is drawn in the cabinet 100 through the supply duct 200, and cleaned passing through the filter 170. The air cleaned in the filter 170 is radially discharged by the centrifugal fan 161 of the fan, and then discharged to the room through the first outlet 130.

Due to the fan 310 of the exhaust duct 300, the contaminated room air flowed in the third inlet 170 via the fan 310 of the exhaust duct is discharged outside thereof through the second outlet 140 and the exhaust duct 300. Through the aforementioned processes, a ventilation mode of the air cleaning system is performed.

A process of operating the air cleaning system in the air cleaning mode for cleaning the room air by circulating the room air without the air ventilation is described as follows.

Once the electric power is supplied to the air cleaning system, the first inlet 110 is opened by the at least one panel 180, the second inlet 120 is blocked by the damper 121, and the third outlet 140 is also blocked by the second damper 141. In this case, the fan 160 of the cabinet is driven but the fan 310 of the exhaust duct 300 is not driven.

Due to the driving of the fan 160 of the cabinet, the contaminated room air is flowed in the cabinet 100 through the first inlet 110, and the air flowed in the cabinet 100 is purified passing through the filter 170.

The air purified at the filter 170 is then radially discharged by the centrifugal fan 161 of the fan, and discharged to the room through the first outlet 130.

Through the aforementioned processes, air cleaning mode of the air cleaning system is performed for cleaning the room air.

Meanwhile, when the first inlet 110 is opened by the at least one panel 180, the second inlet 120 is opened by the first damper 121, the third outlet 140 is opened by the second damper 141, and the fan 160 of the cabinet and the fan 310 of the exhaust duct are driven, the air cleaning system simultaneously performs ventilation and cleaning of the room air.

Accordingly, the air cleaning system according to the present invention has the following effects.

Firstly, according to the air cleaning system of the present invention, since the inlet through which the room air drawn is selectively opened/closed by the panel, the impurities such as the dust particles are prevented from being caught in the inlet, thereby preventing the decrease of the suction performance.

Secondly, since the air cleaning system of the present invention is operated not only in the ventilation mode but also in the cleaning mode for cleaning the room air, the room environment can be pleasantly maintained.

Thirdly, according to the air cleaning system of the present invention, since the inlet through which the room air is drawn is selectively opened/closed by the panel, the beauty of the air cleaning system is enhanced, and during the operation of the air cleaning system or during the stoppage of the air cleaning system, dust particles piled up in the cabinet are prevented from falling to a floor of the room.

It will be apparent to those skilled in the art that various modifications and variations can be made in the present invention. Thus, it is intended that the present invention cover the modifications and variations of this invention provided they come within the scope of the appended claims and their equivalents.

The claims refer to examples of preferred embodiments of the invention. However, the invention also refers to the use of any single feature and subcombination of features which are disclosed in the claims, the description and / or the drawings.

## Claims

1. An air cleaning system comprising:
a cabinet provided to a ceiling or a wall, discharging purified air to a room, and having a first inlet formed on a side thereof for drawing room air;
a fan is provided to a cabinet and drawing air into the cabinet;
a filter for purifying the room air flowed into the cabinet via the fan; and
at least one panel for selectively opening/closing the first inlet of the cabinet.

2. The air cleaning system of claim 1, wherein the cabinet comprises an opening/closing device for opening/closing at least one panel.

3. The air cleaning system of claim 2, wherein the at least one panel has one side rotatbly connected with one side of the first inlet via a hinge.

4. The air cleaning system of claim 3, wherein the opening/closing device comprises:
a driving gear rotated by a motor; and
a driven gear provided to the hinge and rotated by the driving gear.

5. The air cleaning system of claim 4, wherein the motor comprises a stepping motor for adjusting an opening angle of the panel.

6. The air cleaning system of claim 2, wherein the at least one panel comprises:
a first panel; and
a second panel being slid onto a first side of the first panel and stacked on the first panel.

7. The air cleaning system of claim 6, wherein the opening/closing device comprises:
a pinion connected to the motor and rotated; and
a rack provided at a side of the second panel and moving in a straight line via the pinion.

8. The air cleaning system of claim 7, wherein the motor comprises a stepping motor for adjusting an opening area of the first inlet.

9. The air cleaning system of claim 2, wherein the at least one panel is vertically moved downward for opening the first inlet.

10. The air cleaning system of claim 6, wherein the opening/closing device comprises:
a pinion provided to the motor; and
a rack provide at the at least one panel and moving in a straight line via the pinion.

11. The air cleaning system of claim 10, wherein the motor comprises a stepping motor for adjusting a distance between the first inlet and the at least one panel.

12. The air cleaning system of claim 1, further comprising:
a supply duct communicating with the cabinet and guiding outside air to the cabinet; and
an exhaust duct for guiding the room air outside.

13. The air cleaning system of claim 12, wherein the cabinet comprises a second inlet provided on a side of the first inlet and communicating with the exhaust duct.

14. The air cleaning system of claim 12, wherein the filter is provided between the first inlet and the fan, and purifies air flowed into the cabinet through the first inlet and the supply duct.

15. The air cleaning system of claim 14, wherein a space is formed between the filter and the first inlet, and the outside air guided the exhaust duct is flowed into a space between the filter and the first inlet.

16. The air cleaning system of claim 12, wherein the exhaust duct comprises an exhaust fan for forcing airflow therein.

17. The air cleaning system of claim 16, further comprising a damper for selectively preventing the room air from being flowed into the exhaust duct.

18. The air cleaning system of claim 12, further comprising a damper for selectively blocking the outside air guided by the cabinet through the supply air duct.

19. The air cleaning system of claim 12, further comprising a regenerative heat exchanger for exchanging the heat between the outside air guided by the supply duct and the room air guided by the exhaust duct.

20. The air cleaning system of claim 1, wherein the fan comprises a centrifugal fan provided parallel to the first inlet.
